# EUROPEAN PATENT APPLICATION

(11) **EP 2 392 493 A1**
(43) Date of publication of application: **07.12.2011**
(21) Application number: 11168133.4
(22) Date of filing: 30.05.2011
(51) Int. Cl.: B60Q 1/26, F21V 7/00

(54) **Automotive vehicle illumination apparatus**

(30) Priority: 01.06.2010 CN 201010192434
(71) Applicant: Valeo Lighting Hubei Technical Center Co Ltd, Wuhan Economic and Development Zone Hubei (CN)
(72) Inventor: Mottet, Laurent, 93012 BOBIGNY Cedex (FR); Fan, Lei, 93012 BOBIGNY Cedex (FR)

(57) **Abstract**

An automotive vehicle illumination apparatus is disclosed. The automotive vehicle illumination apparatus comprises: a light source (11); a first optical member (12) which includes a light distribution surface (121) for reflecting a light emitted from the light source (11); and a second optical member (13) which is capable of transmitting the light reflected by said light distribution surface (121) of said first optical member (12) and the light emitted from the light source (11). At least one of said first optical member (12) and said second optical member (13) is a partial reflection-transmission member. The illumination apparatus carries out various illumination functions and/or effects by using a partial reflection-transmission member and single light source (11) in order to reduce the power consumption and the cost.

## Description

### CROSS-REFERENCE TO RELATED APPLICATION

The present application claims the benefit of Chinese Patent Application No. 201010192434.8 filed on June 1, 2010 in the State Intellectual Property Office of China, the disclosure of which is incorporated herein by reference.

### BACKGROUND OF THE INVENTION

### 1. Field of the Invention

The present invention relates to the field of automotive vehicle illumination, in particular, to an automotive vehicle illumination apparatus.

### 2. Description of the Related Art

With increasing popularization of automotive vehicles and continuing development in the traffic regulation, the automotive vehicle illumination apparatus becomes more and more critical. Generally, an automotive vehicle illumination apparatus may comprise a light source, a reflector, a transmission optical element and so on. A certain function or effect of illumination can be achieved by the light source in combination with some reflection and/or transmission assemblies.

There are only mono-functional reflection elements or mono-functional transmission elements in the current automotive vehicle illumination apparatus. In practice, a combination of one light source and a set of mono-functional reflection elements or mono-functional transmission elements is often used to achieve only one illumination function or effect. However, a vehicle requires various illumination circumstances, such as, for brake light, fog light, sidelights. Thus, the automotive vehicle illumination apparatus usually contains several light sources such that it occupies a bulky volume and has considerable energy consumption. Such configuration with several light sources restricts the flexibility in designing of the illumination apparatus and improvement of the vehicle exterior appearance.

Therefore, it is desired to provide a new automotive vehicle illumination apparatus with good flexibility, high illumination efficiency, low energy consumption and reduced volume.

### SUMMARY OF THE INVENTION

In view of above, an object of the present invention is to address at least one of the above problems. In particular, the object of the present invention is to provide an automotive vehicle illumination apparatus, which carries out various illumination functions and/or effects by using a partial reflection-transmission member and single light source in order to reduce the power consumption and the cost.

In accordance with an aspect of the present invention, there is provided an automotive vehicle illumination apparatus comprising: a light source, a first optical member which includes a light distribution surface for reflecting a light emitted from the light source, and a second optical member which is capable of transmitting the light reflected by the light distribution surface of the first optical member and the light emitted from the light source, wherein at least one of the first optical member and the second optical member is a partial reflection-transmission member.

In an embodiment, the first optical member may be the partial reflection-transmission member, which is capable of reflecting a first part of the light from the light source by the light distribution surface while a remaining second part of the light from the light source is transmitted through the first optical member.

In a further embodiment, the automotive vehicle illumination apparatus further may comprise a third optical member which is configured to reflect the second part of the light transmitted through the first optical member and to allow the reflected second part of the light to be transmitted through the second optical member.

In a further embodiment, the third optical member may reflect the second part of the light in a manner of specular light distribution reflection or diffused reflection.

In a further embodiment, the automotive vehicle illumination apparatus further may comprise a bezel or a lamp body on which the third optical member is disposed.

In an embodiment, the first part of the light for an illumination of a first function lamp has a proportion of R11 while the remaining second part of the light for an illumination of a second function lamp has a proportion of R21. The ratio of R11 to R21 may be between 3:1 and 20:1 or between 5:1 and 65:1.

In a further embodiment, the ratio of R11 to R21 may be between 10:1 1 and 20:1. Preferably, the ratio of R11 to R21 is 15:1.

In an embodiment, the proportion R11 of the first part of the light is 90% which is directed for illumination of the first function lamp while the proportion R21 of the second part of the light is 10% which is directed for illumination of the second function lamp; or the proportion R11 of the first part of the light is 80% which is directed for illumination of the first function lamp while the proportion R21 of the second part of the light is 20% which is directed for illumination of the second function lamp.

In an embodiment, the first function lamp is a brake lamp while said second function lamp is a position lamp; or the first function lamp is a position lamp while the second function lamp is a background lamp.

In an embodiment, the light reflected by the first optical member may have a divergence angle scope between 10 and 85 degrees in a horizontal direction and between 5 and 25 degrees in a vertical direction, or a divergence angle scope between 5 and 15 degrees in a horizontal direction and between 3 and 10 degrees in a vertical direction.

In a further embodiment, the divergence angle scope may be more than 20 degrees in a horizontal direction and more than 10 degrees in a vertical direction, or may be more than 10 degrees and not more than 15 degrees in a horizontal direction and more than 5 degrees and not more than 10 degrees in a vertical direction.

In a further embodiment, the divergence angle scope may be 22 degrees in a horizontal direction and 12 degrees in a vertical direction, or may be 12 degrees in a horizontal direction and 7 degrees in a vertical direction.

In an embodiment, the light reflected by the third optical member may have a divergence angle scope between 10 and 85 degrees in a horizontal direction and between 5 and 25 degrees in a vertical direction, or a divergence angle scope between 5 and 15 degrees in a horizontal direction and between 3 and 10 degrees in a vertical direction.

In a further embodiment, the divergence angle scope of the third optical member may be more than 20 degrees in a horizontal direction and more than 10 degrees in a vertical direction, or may be more than 10 degrees and not more than 15 degrees in a horizontal direction and more than 5 degrees and not more than 10 degrees in a vertical direction.

In a further embodiment, the divergence angle scope of the third optical member may be 22 degrees in a horizontal direction and 12 degrees in a vertical direction, or may be 12 degrees in a horizontal direction and 7 degrees in a vertical direction.

In an embodiment, the second optical member may be the partial reflection-transmission member, which is capable of transmitting a first part of the light illuminated thereon while reflecting a remaining second part of the light illuminated thereon.

In an embodiment, the first part of the light illuminated on the second optical member may be emitted from the light source or derived from the first optical member.

In a further embodiment, the first part of the light for an illumination of a first function lamp has a proportion of R12 while the remaining second part of the light for an illumination of a second function lamp has a proportion of R22. The ratio of R12 to R22 may be between 3:1 and 20:1 or between 5:1 and 65:1.

In a further embodiment, the ratio of R12 to R22 may be between 10:1 and 20:1. Preferably, the ratio of R 12 to R22 is 15:1.

In an embodiment, the proportion R12 of the first part of the light is 90% which is directed for illumination of the first function lamp while the proportion R22 of the second part of the light is 10% which is directed for illumination of the second function lamp; or the proportion R12 of the first part of the light is 80% which is directed for illumination of the first function lamp while the proportion R22 of the second part of the light is 20% which is directed for illumination of the second function lamp.

In an embodiment, the first function lamp is a brake lamp while the second function lamp is a position lamp; or the first function lamp is a position lamp while the second function lamp is a background lamp.

In an embodiment, the first part of the light transmitted directly through the second optical member instead of being reflected by the second optical member may have a divergence angle scope between 10 and 85 degrees in a horizontal direction and between 5 and 25 degrees in a vertical direction, or a divergence angle scope between 5 and 15 degrees in a horizontal direction and between 3 and 10 degrees in a vertical direction.

In a further embodiment, the divergence angle scope of the first part of the light transmitted directly through the second optical member instead of being reflected by the second optical member may be more than 20 degrees in a horizontal direction and more than 10 degrees in a vertical direction, or may be more than 10 degrees and not more than 15 degrees in a horizontal direction and more than 5 degrees and not more than 10 degrees in a vertical direction.

In a further embodiment, the divergence angle scope may be 22 degrees in a horizontal direction and 12 degrees in a vertical direction, or may be 12 degrees in a horizontal direction and 7 degrees in a vertical direction.

In an embodiment, the light reflected by the first optical member after being reflected by the second optical member may have a divergence angle scope between 10 and 85 degrees in a horizontal direction and between 5 and 25 degrees in a vertical direction, or a divergence angle scope between 5 and 15 degrees in a horizontal direction and between 3 and 10 degrees in a vertical direction.

In a further embodiment, the divergence angle scope of the light reflected by the first optical member after being reflected by the second optical member may be more than 20 degrees in a horizontal direction and more than 10 degrees in a vertical direction, or may be more than 10 degrees and not more than 15 degrees in a horizontal direction and more than 5 degrees and not more than 10 degrees in a vertical direction.

In a further embodiment, the divergence angle scope of the light reflected by the first optical member after being reflected by the second optical member is 22 degrees in a horizontal direction and 12 degrees in a vertical direction, or is 12 degrees in a horizontal direction and 7 degrees in a vertical direction.

With the above configuration, the flexibility of optical paths in the illumination apparatus can be improved, the efficiency of the light source can be increased and the energy and cost can be saved.

### BRIEF DESCRIPTION OF THE DRAWINGS

The embodiments of the automotive vehicle illumination apparatus according to the present invention will be described in detail below with reference to accompanying drawings in which:
Fig. 1 is a schematic view showing the automotive vehicle illumination apparatus according to an embodiment of the present invention; and
Fig. 2 is a schematic view showing the automotive vehicle illumination apparatus according to another embodiment of the present invention.

### DETAILED DESCRIPTION OF THE EMBODIMENTS

Specific embodiments of the present invention will be described hereinafter in detail with reference to the accompanying drawings. In the drawings, like reference numerals refer to like parts. The embodiments are described below in order to explain the general concept of the present invention without limitations on the scope of the invention.

The automotive vehicle illumination apparatus according to the present invention may comprise a light source 11, a first optical member 12 and a second optical member 13. The first optical member 12 may include a light distribution surface 121 for reflecting a light emitted from the light source 11. The second optical member 13 is capable of transmitting the light 111 reflected by the light distribution surface 121 of the first optical member 12 and the light emitted from the light source 11. At least one of the first optical member 11 and the second optical member 12 may be a partial reflection-transmission member.

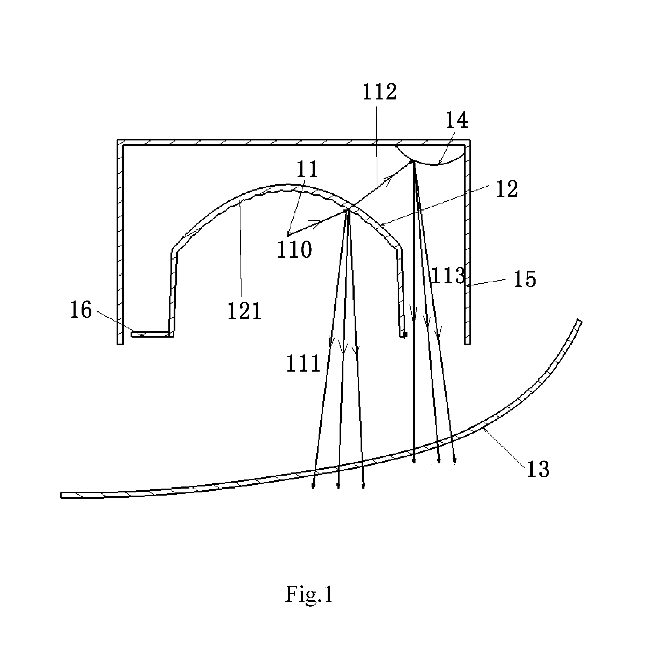

Fig. 1 shows an embodiment of the automotive vehicle illumination apparatus according to the present invention. In the embodiment, the first optical member 12 is the partial reflection-transmission member. A first part 111 of the light from the light source 11 is reflected by the light distribution surface 121 while a remaining second part 112 of the light from the light source transmits through the first optical member 12. With the first optical member 12 having both of reflection and transmission functions, the light 110 emitted from the light source 11 is divided into two parts at a position of the first optical member 12. The first part 111 is reflected while the second part 112 is transmitted. The two parts 111, 112 can be used to achieve different illumination functions respectively. As the first optical member 12 has a different effect on the first part 111 from that on the second part 112 and the first part 111 and the second part 112 travel along different optical paths, the two parts may have distinct distributions of intensity and phase in order to achieve distinct illumination functions.

In addition, as illustrated in Fig. 1, the automotive vehicle illumination apparatus further may comprise a third optical member 14 which is configured to reflect the second part 112 of the light transmitted through the first optical member 12 and to allow the reflected second part 113 of the light to be transmitted through the second optical member 13. The third optical member 14 may be designed to reflect the second part 112 of the light in a manner of specular light distribution reflection or diffused reflection as desired. The term "specular light distribution reflection" herein means that an incident light is reflected with a predetermined intensity along a certain direction such that there is a desired intensity distribution in a certain direction or an angle scope. In the circumstance of specular light distribution reflection, a reflective surface of the third optical member 14 may be configured to meet the requirement of the specular light distribution reflection. For example, the reflective surface may have a certain convex-concave shape or certain features, such as projections, may be formed on the reflective surface to restrict and adjust the direction and intensity of the reflected light. The term "diffused reflection" herein means that the incident light is reflected and diffused by a relative rough reflective surface in order to achieve the effects of e.g. background light by the diffused light.

In an example of the above embodiment, the light distribution surface 121 of the first optical member 12 may be arranged to reflect the first part 111 of the light to the second optical member 13, and then pass through the second optical member 13 to achieve the illumination as a first function lamp. The second part 112 of the light transmitted through the first optical member 12 is reflected by the third optical member 14 to form a light 113. The light 113 is also transmitted through the second optical member 13 to achieve the illumination as a second function lamp. It is assumed that the energy of the first part 111 of the light has a proportion of R11 in the total energy of the light 110 irradiated on the first optical member 12 while the energy of the remaining second part 112 of the light has a proportion of R21 in the total energy of the light 110 irradiated on the first optical member 12. The ratio of R11 to R21 can be chosen freely on basis of the design of the function lamp, e.g., it may be between 3:1 and 20:1 or between 5:1 and 65:1. Preferably, the ratio of R11 to R21 may be between 10:1 and 20:1. More preferably, the ratio of R11 to R21 is 15:1. Also, R11 may be set as 90% while R21 may be set as 10%; or R11 may be set as 80% while R21 may be set as 20%.

The first function lamp may for example be a brake lamp while the second function lamp may be a position lamp; or the first function lamp may for example be a position lamp while the second function lamp may be a background lamp. The angle scope of the illumination may be arranged depending on the illumination requirements of the function lamps. For example, for the illumination of the first part 111 of the light as the brake lamp, the first part 111 of the light reflected by the first optical member 12 may have a divergence angle scope between 10 and 85 degrees, preferably more than 20 degrees, more preferably 22 degrees in a horizontal direction. And the first part 111 of the light reflected by the first optical member 12 may have a divergence angle scope between 5 and 25 degrees, preferably more than 10 degrees, more preferably 12 degrees in a vertical direction. In another example, for the illumination of the first part 111 of the light as the fog lamp, the first part 111 of the light reflected by the first optical member 12 may have a divergence angle scope between 5 and 15 degrees, preferably more than 10 degrees, more preferably 12 degrees in a horizontal direction and between 3 and 10 degrees, preferably more than 5 degrees, more preferably 7 degrees in a vertical direction.

In the case that the light 113 reflected by the third optical member 14 is used as the position lamp, the light 113 may have a divergence angle scope between 10 and 85 degrees, preferably more than 20 degrees, more preferably 22 degrees in a horizontal direction and between 5 and 25 degrees, preferably more than 10 degrees, more preferably 12 degrees in a vertical direction. In another example, the light 113 may have a divergence angle scope between 5 and 15 degrees, preferably more than 10 degrees, more preferably 12 degrees in a horizontal direction and between 3 and 10 degrees, preferably more than 5 degrees, more preferably 7 degrees in a vertical direction.

In the case that the first function lamp is the position lamp and the second function lamp is the background lamp, as the optical path length through which the light 113 reflected by the third optical member 14 passes is significantly longer than the optical path length through which the first part 111 of the light reflected by first optical member 12. Thus, the light 113 will produce a visual effect of depth, i.e., improve the feeling of depth in vision in contrast to the first part 111 of the light reflected by the first optical member 12.

In an embodiment, the automotive vehicle illumination apparatus further may comprise a lamp body 15 or a bezel 16 to block and guide light as desired in order to improve the illumination function. The third optical member 14 is disposed on the lamp body 15 or the bezel 16, or is integrated with the lamp body 15 or the bezel 16 to save the space in the apparatus. The third optical member 14 may also be arranged independently of the bezel 16 or the lamp body 15. The third optical member 14 may be plated with aluminum in order to improve reflectivity. Additionally, the third optical member 14 may be provided with an aluminized texture for improving the effects of the background light.

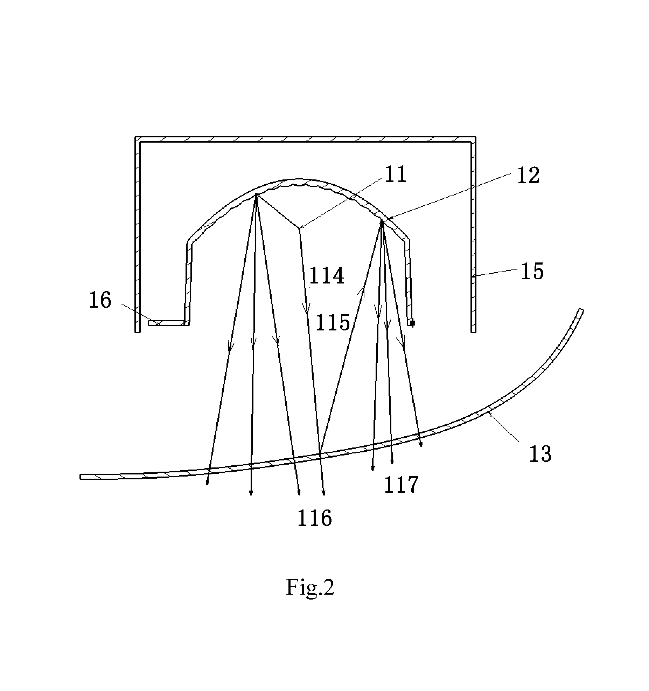

Fig. 2 shows the automotive vehicle illumination apparatus according to another embodiment of the present invention. The embodiment illustrated in Fig. 2 is substantially the same as that illustrated in Fig. 1 except that the first optical member 12 is not reflective and the second optical member 13 is the partial reflection-transmission member in Fig. 2. The second optical member 13 is capable of transmitting a first part 116 of the light 114 illuminated thereon while reflecting a remaining second part 115 of the light 114 illuminated thereon. In the circumstance of Fig. 2, the first part 116 of the light directly transmitted through the second optical member 13 instead of being reflected by the second optical member 13 is used to carry out illumination of the first function lamp. The second part 115 of the light is reflected by the first optical member 12 to form into a light 117 which exits the second optical member 13 to carry out illumination of the second function lamp.

In the embodiment illustrated in Fig. 2, the light 114 illuminated on the second optical member 13 may be derived from the light source, or from the first optical member 12. Although the light 117 for illumination of the second function lamp is formed by the reflection of the first optical member 12, this is not necessary, e.g., it may be formed by the reflection of the other member, such as lamp body 15 or bezel 16.

It is assumed that the energy of the first part 116 of the light transmitted through the second optical member 13 has a proportion of R12 in the total energy of the light 114 irradiated on the second optical member 13 while the energy of the remaining second part 115 of the light has a proportion of R22 in the total energy of the light 114 irradiated on the second optical member 13. The ratio of R12 to R22 can be chosen freely depending on the design of the function lamps, e.g., it may be between 3:1 and 20:1 or between 5:1 and 65:1. Preferably, the ratio of R12 to R22 may be between 10:1 and 20:1. More preferably, the ratio of R12 to R22 is 15:1. Also, R12 may be set as 90% while R22 may be set as 10%; or R12 may be set as 80% while R22 may be set as 20%.

Similarly, the first function lamp may for example be a brake lamp while the second function lamp may be a position lamp; or the first function lamp may for example be a position lamp while the second function lamp may be a background lamp. The angle scope of the illumination may be arranged depending on the illumination requirements of the function lamps. For example, for the illumination of the first part 116 of the light as the brake lamp, the first part 116 of the light transmitted through the second optical member 13 may have a divergence angle scope between 10 and 85 degrees, preferably more than 20 degrees, more preferably 22 degrees in the horizontal direction. And the first part 116 of the light transmitted through the second optical member 13 may have a divergence angle scope between 5 and 25 degrees, preferably more than 10 degrees, more preferably 12 degrees in the vertical direction. In another example, for the illumination of the first part 116 of the light as the fog lamp, the first part 116 of the light transmitted through the second optical member 13 may have a divergence angle scope between 5 and 15 degrees, preferably more than 10 degrees, more preferably 12 degrees in the horizontal direction and between 3 and 10 degrees, preferably more than 5 degrees, more preferably 7 degrees in the vertical direction.

In the case that the light 117 is used for the position lamp, the light 117 formed by the reflection of the second optical member 13 and then the first optical member 12 or the other members may have a divergence angle scope between 10 and 85 degrees, preferably more than 20 degrees, more preferably 22 degrees in the horizontal direction and between 5 and 25 degrees, preferably more than 10 degrees, more preferably 12 degrees in the vertical direction. In another example, the light 117 may have a divergence angle scope between 5 and 15 degrees, preferably more than 10 degrees, more preferably 12 degrees in the horizontal direction and between 3 and 10 degrees, preferably more than 5 degrees, more preferably 7 degrees in the vertical direction.

As appreciated by the skilled person in the art, the ratio of R11 to R21, the ratio of R21 to R22, the divergence angle scope and the specific arrangement of the function lamps are only illustrative, instead of limiting the embodiments.

Although the embodiments of the present invention have been described as above with reference to the illumination functions of the brake lamp, the fog lamp, the position lamp and the background lamp, the skilled person would appreciate that the above first and second illumination functions may be any other illumination functions, such as, low light, high light, which are defined by the condition of the vehicle and the traffic regulation. The third or further illumination functions may also be achieved by combining the above embodiments.

The skilled person in the art would appreciate that the combination of the technical solution in Fig. 1 and that in Fig. 2, i.e., the technical solution in which the first optical member 12 and the second optical member 13 are both the partial reflection-transmission member, falls within the scope of the present invention. The combination may be used to carry out more illumination functions. For example, the light which is reflected by the first optical member 12 and then transmitted through the second optical member 13 instead of being reflected by the second optical member 13 may be used for the illumination of the first function lamp; the light which is reflected by the second optical member 13 and then reflected by the first optical member 12 may be used for the illumination of the second function lamp; and the light which is transmitted through the first optical member 12 and then reflected may be used for the illumination of the third function lamp.

As appreciated by the skilled person in the art, the above first optical member 12 and/or the second optical member 13 are the partial reflection-transmission member, and thus the light illuminated at a position on the first optical member 12 and/or the second optical member 13 will be divided into two parts, i.e., the reflected part and the transmitted part. However, it is not necessary that all parts of the first optical member 12 and/or the second optical member 13 have both of the reflection function and the transmission function. In contrast, it is only required that the parts of the first optical member 12 and/or the second optical member 13 which correspond to the optical path for illumination of the second or third optical member have the reflection function and the transmission function.

For example, as an example in the embodiment in which the first optical member 12 and the third optical member 14 are contained, shown in Fig. 1, only the part of the first optical member 12 through which the light emitted from the light source 11 to the third optical member 14 passes may be provided as a partial reflection-transmission part and the other part of the first optical member 12 may be provided as a mono-functional reflective part. Similarly, as an example in the embodiment shown in Fig. 2, only the central part of the second optical member 13 may be provided as a partial reflection-transmission part to allow the light 114 emitted from the light source 11 to be reflected to the first optical member 12 and the other part of the second optical member 13, e.g., the part of the second optical member 13 from which the illumination light exits, may be provided as a mono-functional transmissive part to reduce the light loss caused by the reflection. On the other hand, in order to simplify manufacturing processes or to achieve a certain illumination functions or effects in entirety, all parts of the first optical member 12 and/or the second optical member 13 may have both reflection and transmission functions.

Although the above embodiments have been described by the example of two illumination functions, the skilled person in the art would be appreciated that more optical members may be configured and/or combined to achieve more illumination functions, or one light source may be used to achieve more illumination functions. The features in the respective embodiments may also be combined with each other to achieve desired functions.

In the further embodiments, the illumination apparatus may contain an intensity adjustable light source and/or a movable shade member, which may be cooperated with the partial reflection-transmission member in the above embodiments to further increase the flexibility of the system design and to further improve the illumination functions or effects.

Although the general concept and some specific embodiments of the present invention have been described and illustrated, modifications to the above embodiments can be carried out without departing the spirit and the principle of the present invention. The scope of the present invention is defined by the appended claims and their equivalent.

## Claims

1. An automotive vehicle illumination apparatus, comprising:
a light source;
a first optical member which includes a light distribution surface for reflecting a light emitted from the light source; and
a second optical member which is capable of transmitting the light reflected by said light distribution surface of said first optical member and the light emitted from the light source,
wherein at least one of said first optical member and said second optical member is a partial reflection-transmission member.

2. The automotive vehicle illumination apparatus according to claim 1,
wherein said first optical member is the partial reflection-transmission member, which is capable of reflecting a first part of the light from the light source by said light distribution surface while a remaining second part of the light from the light source is transmitted through said first optical member.

3. The automotive vehicle illumination apparatus according to claim 2, further comprising a third optical member which is configured to reflect the second part of the light transmitted through said first optical member and to allow the reflected second part of the light to be transmitted through said second optical member.

4. The automotive vehicle illumination apparatus according to claim 3, wherein said third optical member reflects the second part of the light in a manner of specular light distribution reflection or diffused reflection.

5. The automotive vehicle illumination apparatus according to claim 3, further comprising a bezel or a lamp body on which said third optical member is disposed.

6. The automotive vehicle illumination apparatus according to any of claims 1-5, wherein the first part of the light for an illumination of a first function lamp has a proportion of R11 while the remaining second part of the light for an illumination of a second function lamp has a proportion of R21, the ratio of R11 to R21 being between 3:1 and 20:1 or between 5:1 and 65:1.

7. The automotive vehicle illumination apparatus according to claim 6, wherein the ratio of R11 to R21 is between 10:1 and 20:1.

8. The automotive vehicle illumination apparatus according to claim 7, wherein the ratio of R11 to R21 is 15:1.

9. The automotive vehicle illumination apparatus according to claim 6,
wherein
the proportion R11 of the first part of the light is 90% while the proportion R21 of the second part of the light is 10%; or
the proportion R11 of the first part of the light is 80% while the proportion R21 of the second part of the light is 20%.

10. The automotive vehicle illumination apparatus according to claim 6,
wherein
said first function lamp is a brake lamp while said second function lamp is a position lamp; or
said first function lamp is a position lamp while said second function lamp is a background lamp.

11. The automotive vehicle illumination apparatus according to any of claims 3-5, wherein the light reflected by said first optical member has a divergence angle scope between 10 and 85 degrees in a horizontal direction and between 5 and 25 degrees in a vertical direction, or a divergence angle scope between 5 and 15 degrees in a horizontal direction and between 3 and 10 degrees in a vertical direction.

12. The automotive vehicle illumination apparatus according to any of claims 3-5, wherein the light reflected by said third optical member has a divergence angle scope between 10 and 85 degrees in a horizontal direction and between 5 and 25 degrees in a vertical direction, or a divergence angle scope between 5 and 15 degrees in a horizontal direction and between 3 and 10 degrees in a vertical direction.

13. The automotive vehicle illumination apparatus according to claim 1, wherein said second optical member is the partial reflection-transmission member, which is capable of transmitting a first part of the light illuminated thereon while reflecting a remaining second part of the light illuminated thereon.
